# EUROPEAN PATENT SPECIFICATION

(11) **EP 4 362 205 B1**
(45) Date of publication and mention of the grant of the patent: **10.06.2026**
(21) Application number: 23203243.3
(22) Date of filing: 12.10.2023
(51) Int. Cl.: H01M 50/528, H01M 50/533, H01M 50/536, H01M 50/538, H01M 50/55, H01M 50/553

(54) **SECONDARY BATTERY**
SEKUNDÄRBATTERIE
BATTERIE SECONDAIRE

(30) Priority: 31.10.2022 KR 20220142332
(43) Date of publication of application: 01.05.2024
(73) Proprietor: Samsung SDI Co., Ltd., Yongin-si, Gyeonggi-do 17084 (KR)
(72) Inventor: Park, Ho Lim, 17084 Yongin-si, Gyeonggi-do, (KR)
(74) Representative: Gulde & Partner

(56) References cited:
- EP-A1- 3 614 461
- EP-A1- 4 287 386
- US-A1- 2019 067 667
- US-A1- 2021 257 649

## Description

### BACKGROUND

### 1. Field

Aspects of embodiments of the present invention relate to a secondary battery.

### 2. Description of the Related Art

Unlike a primary battery that cannot be charged, a secondary battery is a battery that can be charged and discharged. Low-capacity batteries are used in portable small electronic devices, such as smartphones or digital cameras, and large-capacity batteries in the form of a module in which dozens to hundreds of battery packs are connected are widely used as power sources for driving motors in hybrid vehicles, electric vehicles, drones, or energy storage devices, for example.

A rechargeable secondary battery includes an electrode assembly in which a separator is interposed between a positive electrode plate and a negative electrode plate, a current collector plate electrically connected to the electrode assembly, a terminal electrically connected to the current collector plate, a case accommodating the electrode assembly and the current collector plate, and a cap plate which seals the case and which the terminal penetrates to be coupled thereto.

The electrode assembly and the current collector plate may be electrically/mechanically connected to each other generally by laser welding. As an example, in a state in which the current collector plate located on the outside and a substrate tab of the electrode assembly, located on the inside, are in contact with each other, the outer current collector plate and the inner substrate tab are laser welded to each other. As an example, the inner area of the current collector plate is melted by a laser beam provided from the outside, and a melted region (melting pool) is coupled to the substrate tab, such that the current collector plate and the substrate tab are electrically/mechanically connected (welded) to each other.

However, during this manufacturing process, it is necessary to supply the molten pool by the laser beam to the inner surface of the current collector plate, and the separator around the substrate tab may be damaged due to the molten pool. When the separator is damaged, the positive and negative plates may be electrically shorted to each other.

Moreover, due to this problem, there is a limit in increasing the output of the laser beam and there is a limit in improving the welding quality.

In addition, since it is necessary to melt the inner surface of the current collector plate by the laser beam, the thickness of the current collector plate should be small, and, accordingly, it is difficult to provide a thick current collector plate through which a large current can flow.

EP 3 614 461 A1 concerns a weld configuration to obtain a robust and consistent resistance weld between the tabs of an anode current collector and the casing of an electrochemical cell. US 2019/067667 A1 is directed toward a secondary battery including an electrode assembly capable of achieving a higher capacity than a related art jelly-rolled electrode assembly. EP 4 287 386 A1 relates to a battery cell in which a first connection portion of a tab that is connected to a current collection member is located on a side of the current collection member facing an end cover assembly, such that a space between the current collection member and the end cover assembly is fully used.

The above information disclosed in this Background section is provided for enhancement of understanding of the background of the invention and, therefore, it may contain information that does not constitute prior art.

### SUMMARY

According to an aspect of embodiments of the present invention, a secondary battery according to appended claim 1 is provided in which a planar shape of a current collector plate has a " 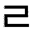 " shape or a meandering shape, and, by having a laser welding structure of a substrate tab-current collector plate-substrate tab, damage to a separator can be prevented or substantially prevented, an output margin of a laser beam can be widened, and, by adopting a thick current collector plate, high-output charge/discharge and rapid charge may be achieved.

The invention is defined in claim 1. Further optional features are defined in the dependent claims.

In one or more embodiments, the welding region may be welded by a laser beam.

In one or more embodiments, the first substrate region of the substrate tab may be closer to the electrode assembly than the second substrate region of the substrate tab.

In one or more embodiments, the first current collecting surface of the current collector plate may be closer to the electrode assembly than the second current collecting surface of the current collector plate.

The substrate tab includes a first substrate section having the first and second substrate regions and a second substrate section spaced apart from the first substrate section and having the first and second substrate regions. The first and second substrate sections are bent in opposite directions.

The current collector plate is seated on a first substrate region of the first substrate section and includes a first current collecting part to which the second substrate region of the first substrate section is welded, and a second current collecting part which is seated on the first substrate region of the second substrate section and to which the second substrate region of the second substrate section is welded.

In one or more embodiments, a longitudinal direction of the first current collecting part and a longitudinal direction of the second current collecting part may be offset with respect to each other.

In one or more embodiments, the current collector plate may have a planar shape including a meandering shape.

In one or more embodiments, the current collector plate may further include a current collecting connecting part connecting the first current collecting part and the second current collecting part.

In one or more embodiments, the current collecting connecting part may be exposed from the second substrate region of the first and second substrate sections.

In one or more embodiments, the first current collecting part of the current collector plate and the second current collecting part of the current collector plate may be closer to the electrode assembly than the current collecting connecting part.

In one or more embodiments, the current collector plate may include a first recess through which the first substrate section of the substrate tab may pass through a side of the first current collecting part, and a second recess through which the second substrate section of the substrate tab may pass through a side of the second current collecting part.

In one or more embodiments, the secondary battery may further include: a case accommodating the electrode assembly; a first terminal electrically connected to a side of the electrode assembly; a second terminal electrically connected to another side of the electrode assembly; and a cap assembly coupled to an opening of the case.

In one or more embodiments, the first terminal may be electrically connected to first substrate tabs and the second terminal may be electrically connected to second substrate tabs.

In one or more embodiments, a first current collector plate may be interposed between a side of the electrode assembly and the first terminal and a second current collector plate may be interposed between another side of the electrode assembly and the second terminal.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is a perspective view illustrating a secondary battery according to an embodiment of the present invention.
FIG. 2A is a cross-sectional view taken along the line 2a-2a in FIG. 1; and FIGS. 2B and 2C are a front view and a perspective view, respectively, of a stack-type electrode assembly in the secondary battery, according to an embodiment.
FIG. 3A is a perspective view illustrating a current collector plate in the secondary battery of the present invention, according to an embodiment; FIG. 3B is a perspective view illustrating a welding state between the current collector plate and an electrode assembly (in some examples, a substrate tab); and FIG. 3C is an enlarged perspective view of the welding state.
FIG. 4A is a cross-sectional view illustrating a welding state of a current collector plate and an electrode assembly (in some examples, a substrate tab) in a secondary battery of the present invention, according to an embodiment; and FIG. 4B is an enlarged perspective view thereof.

### DETAILED DESCRIPTION

Herein, some example embodiments of the present invention will be described in further detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example embodiments set forth herein. Rather, these example embodiments are provided so that this disclosure will be thorough and complete and will convey the aspects and features of the present invention to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the scope of the invention.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

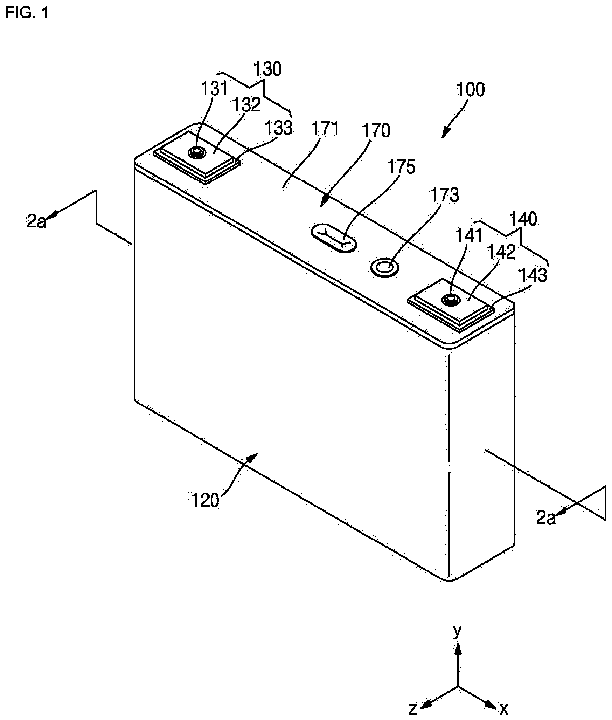

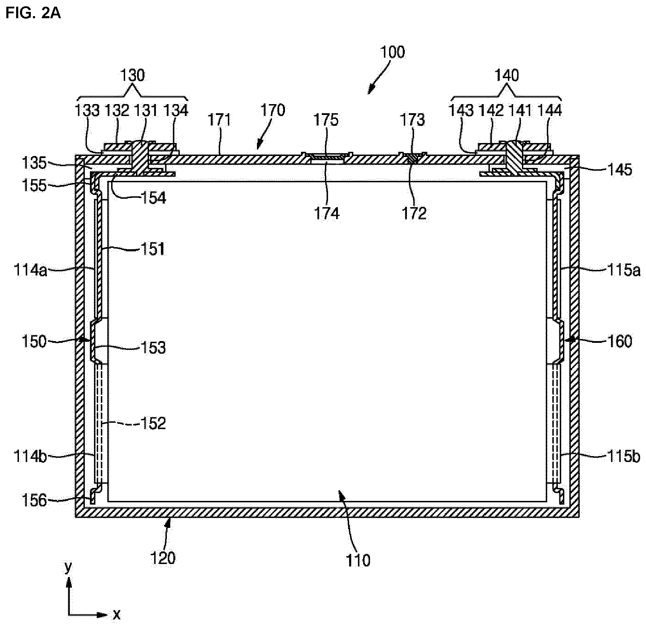

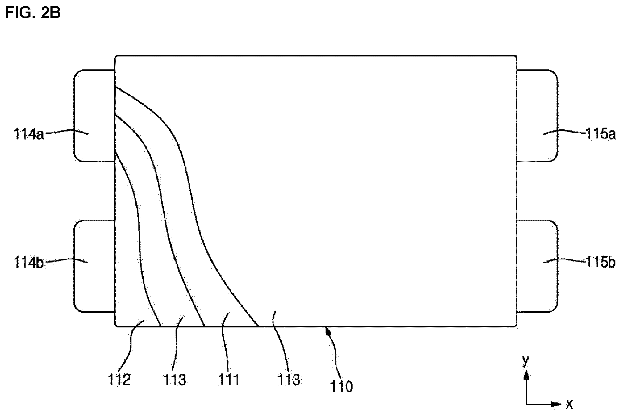

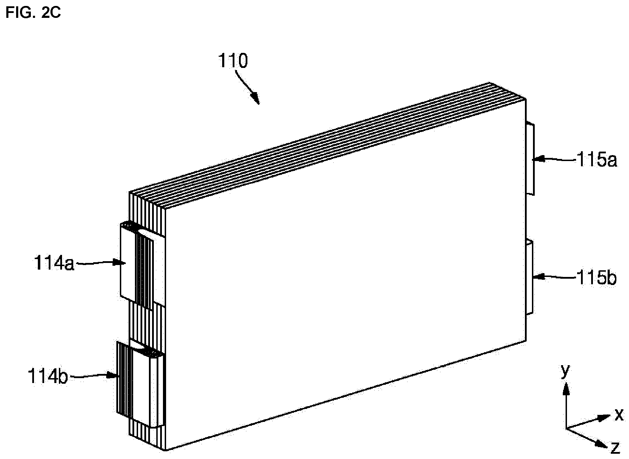

FIG. 1 is a perspective view illustrating a secondary battery 100 of the present invention; FIG. 2A is a cross-sectional view taken along the line 2a-2a in FIG. 1; and FIGS. 2B and 2C are a front view and a perspective view, respectively, of a stack-type electrode assembly 110 in the secondary battery 100.

Referring to FIGS. 1 and 2A to 2C, the secondary battery 100 according to an embodiment of the present invention may include an electrode assembly 110, a case 120 accommodating the electrode assembly 110, a first terminal 130 electrically connected to a side of the electrode assembly 110 (e.g., first substrate tabs 114a and 114b), a second terminal 140 electrically connected to another side of the electrode assembly 110 (e.g., second substrate tabs 115a and 115b), a first current collector plate 150 interposed between a side of the electrode assembly 110 and the first terminal 130, a second current collector plate 160 interposed between another side of the electrode assembly 110 and the second terminal 140, and a cap assembly 170 coupled to an opening of the case 120.

The electrode assembly 110 may include a first electrode plate 111, a second electrode plate 112, and a separator 113 between the first and second electrode plates 111 and 112 (see FIG. 2B). In some examples, the electrode assembly 110 may have a rectangular parallelepiped shape in which a rectangular or square first electrode plate 111, a rectangular or square separator 113, and a rectangular or square second electrode plate 112 are sequentially stacked. In some examples, in the electrode assembly 110, the separator 113 is attached to both sides of the first electrode plate 111, the first electrode plate 111 and the separator 113 are then folded together in an approximate "Z" or "S" shape, and the second electrode plates 112 may be provided in a rectangular parallelepiped shape by being stacked by inserting the second electrode plates 112 on both sides of a zigzag folding region.

When the electrode assembly 110 of a rectangular parallelepiped shape is coupled to the case 120 having the opening of an approximately rectangular parallelepiped shape in such a stack type, there is almost no empty space between the electrode assembly 110 and the case 120, thereby significantly increasing battery capacity.

In some examples, the first electrode plate 111 may operate as a positive electrode, and the second electrode plate 112 may operate as a negative electrode. Conversely, the first electrode plate 111 may operate as a negative electrode, and the second electrode plate 112 may operate as a positive electrode. However, in the present invention, for convenience of explanation, the first electrode plate 111 operates as a positive electrode and the second electrode plate 112 operates as a negative electrode.

In some examples, the first electrode plate 111 is formed by applying a first electrode active material, such as a transition metal oxide, to a first electrode current collector formed of a metal foil, such as aluminum or aluminum alloy, and includes first substrate tabs 114a and 114b, which are regions to which the first electrode active material is applied. The first substrate tabs 114a and 114b serve as passages for current flow between the first electrode plate 111 and the first current collector plate 150.

In some examples, as shown in FIGS. 2A to 2C, the first substrate tabs 114a and 114b protrude/extend to a side of the electrode assembly 110 and may be bent in a substantially "U" shape, and, with this shape, may be connected while covering a portion of a first current collector plate 150 to be described later. In some examples, the first substrate tabs 114a and 114b of the electrode assembly 110 may initially be flat, but may be bent into a substantially "U" shape to be connected to the first current collector plate 150.

In some examples, a pair of first substrate tabs 114a and 114b may be spaced apart from each other in a height direction (e.g., a y direction), and bending directions of the first substrate tabs 114a and 114b may be opposite to each other. For example, if the upper first substrate tab 114a (to be referred to as a first substrate section) is bent from the rear to the front (e.g., a +z direction) in a substantially "U" shape, the lower first substrate tab 114b (to be referred to as a second substrate section) may be bent in a substantially "U" shape from the front to the rear (e.g., a -z direction).

The second electrode plate 112 is formed by applying a second electrode active material, such as graphite or carbon, to a second electrode current collector formed of a metal foil, such as copper, a copper alloy, nickel, or a nickel alloy, and may include second substrate tabs 115a and 115b, which are regions to which the second electrode active material is not applied. The second substrate tabs 115a and 115b serve as passages for current flow between the second electrode plate 112 and the second current collector plate 160.

In some examples, as shown in FIGS. 2A to 2C, the second substrate tabs 115a and 115b protrude/extend to a side of the electrode assembly 110 and may be bent in a substantially "U" shape, and, with this shape, may be connected while covering a portion of a second current collector plate 160 to be described later. In some examples, the second substrate tabs 115a and 115b of the electrode assembly 110 may initially be flat, but may be bent into a substantially "U" shape to be connected to the second current collector plate 160.

In some examples, a pair of second substrate tabs 115a and 115b may be spaced apart from each other in a height direction (e.g., the y direction), and bending directions thereof may be opposite to each other. For example, if the upper second substrate tab 115a (to be referred to as a first substrate section) is bent from the rear to the front (e.g., the +z direction) in a substantially "U" shape, the lower second substrate tab 115b (to be referred to as a second substrate section) may be bent in a substantially "U" shape from the front to the rear (e.g., the -z direction).

In addition, the first substrate tabs 114a and 114b and the second substrate tabs 115a and 115b may protrude/extend/be bent in a horizontal direction from the electrode assembly 110, but may face opposite directions.

The separator 113 is positioned between the first electrode plate 111 and the second electrode plate 112 to prevent or substantially prevent a short circuit and to enable the movement of lithium ions, and, in an embodiment, may include polyethylene, polypropylene, or a composite film of polyethylene and polypropylene. However, in the present invention, the material of the separator 113 is not limited. In some cases, the separator 113 may be replaced with a solid electrolyte.

The electrode assembly 110 is accommodated in the case 120 together with, for example, but not limited to, an electrolyte. The electrolyte may be formed of a lithium salt, such as LiPF₆ or LiBF₄, in an organic solvent, such as EC, PC, DEC, EMC, or DMC. In addition, the electrolyte solution may be a liquid, a solid, or a gel.

In an embodiment, the case 120 may be shaped of a substantially rectangular parallelepiped having an opening formed therein. Thus, the electrode assembly 110 may be inserted into the case 120 through the opening. The case 120 may include a bottom portion, a pair of long sides, and a pair of short sides connecting the pair of long sides, and an opening may be provided in an opposite direction to the bottom portion. In some examples, the case 120 may be made of aluminum or stainless steel, and may be manufactured by a deep drawing process or a bending and welding process.

The first terminal 130 may be electrically connected to the first substrate tabs 114a and 114b of the electrode assembly 110 via the first current collector plate 150. In some examples, the first terminal 130 may include a first terminal pillar 131 penetrating a cap plate 171 of the cap assembly 170, and, inside the case 120, the first current collector plate 150 may be electrically connected to the first terminal pillar 131. Further, the first substrate tabs 114a and 114b of the electrode assembly 110 may be electrically connected to the first current collector plate 150.

In an embodiment, the first current collector plate 150 may be made of a same material as the first substrate tabs 114a and 114b. In some examples, the first substrate tabs 114a and 114b are aluminum-based, and the first current collector plate 150 may also be aluminum-based. Accordingly, the first current collector plate 150 and the first substrate tabs 114a and 114b may be easily welded to each other.

The second terminal 140 may be electrically connected to the second substrate tabs 115a and 115b of the electrode assembly 110 via the second current collector plate 160. In some examples, the second terminal 140 may include a second terminal pillar 141 penetrating the cap plate 171 of the cap assembly 170, and, inside the case 120, the second current collector plate 160 may be electrically connected to the second terminal pillar 141. Further, the second substrate tabs 115a and 115b of the electrode assembly 110 may be electrically connected to the second current collector plate 160.

In an embodiment, the second current collector plate 160 may be made of a same material as the second substrate tabs 115a and 115b. In some examples, the second substrate tabs 115a and 115b are copper- or nickel-based, and the second current collector plate 160 may also be copper- or nickel-based. Therefore, the second current collector plate 160 and the second substrate tabs 115a and 115b may be easily welded to each other.

In an embodiment, the cap assembly 170 may include a flat cap plate 171. In some examples, the cap plate 171 is made of a thin plate material and is coupled to the opening of the case 120 to seal the opening. In an embodiment, the cap plate 171 includes an electrolyte injection part 172 for injecting an electrolyte into the sealed case 120, and the electrolyte injection part 172 is sealed by a sealing plug 173 after the electrolyte is injected. In an embodiment, the cap plate 171 includes a vent hole 174, and a vent plate 175 that is ruptured when the internal pressure of the sealed case 120 exceeds a certain pressure (e.g., a set pressure) may be installed in the vent hole 174. In some examples, the material of the cap plate 171 may be the same as or similar to that of the case 120.

The first terminal 130 may include a first terminal plate 132 (for example, made of aluminum) positioned on the cap plate 171 and coupled to the first terminal pillar 131, an upper insulating member 133 installed between the first terminal plate 132 and the cap plate 171, a first terminal seal gasket 134 interposed between the first terminal pillar 131 and the cap plate 171, and a first terminal lower insulating member 135 installed between the first current collector plate 150 connected to the first terminal pillar 131 and the cap plate 171.

In some examples, the upper insulating member 133 may be replaced with a high-resistance conductor, and, in this case, the cap plate 171 and the case 120 may have a same polarity as the first terminal 130. In some examples, the secondary battery 100 may include the case 120 and the cap plate 171 having a positive polarity.

Further, the second terminal 140 may include a second terminal plate 142 (for example, made of aluminum) positioned on the cap plate 171 and coupled to the second terminal pillar 141, a second terminal upper insulating member 143 installed between the second terminal plate 142 and the cap plate 171, a second terminal seal gasket 144 interposed between the second terminal pillar 141 and the cap plate 171, and a second terminal lower insulating member 145 installed between the second current collector plate 160 connected to the second terminal pillar 141 and the cap plate 171.

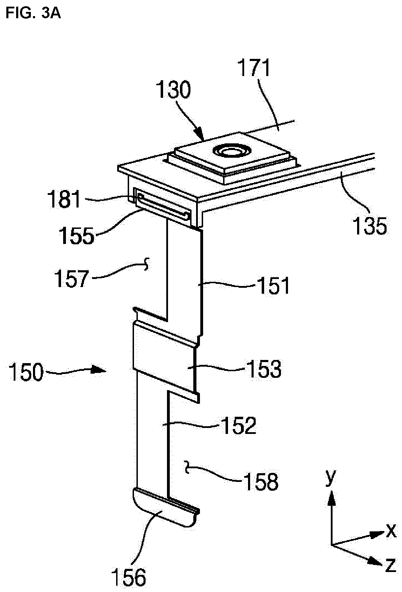

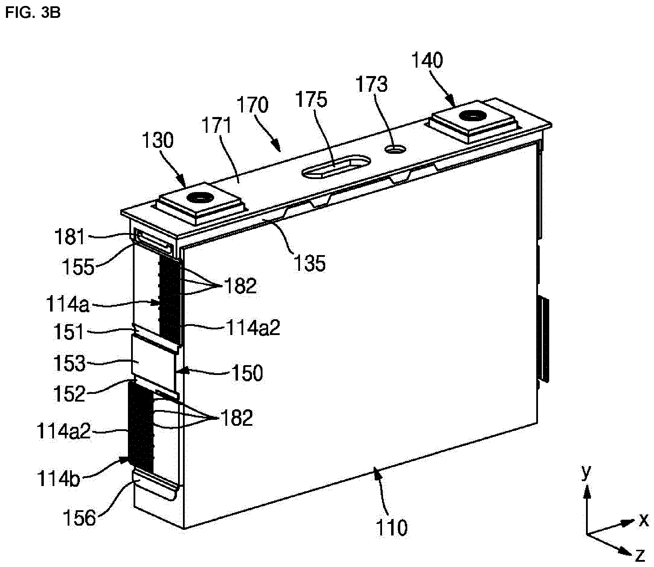

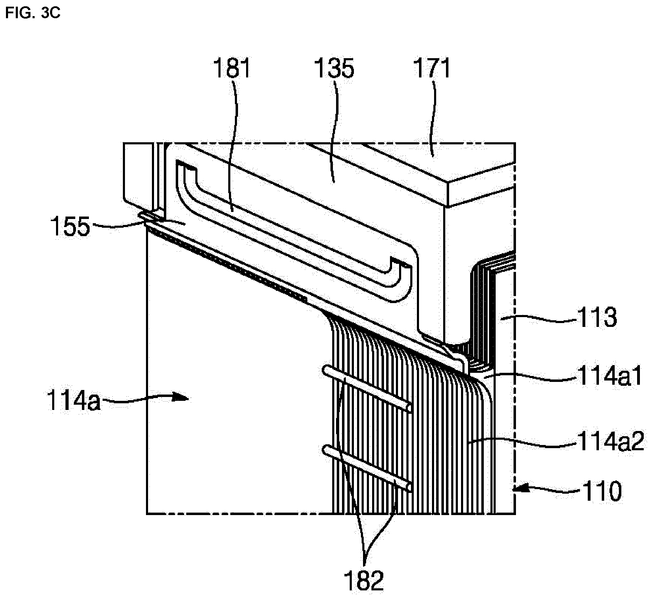

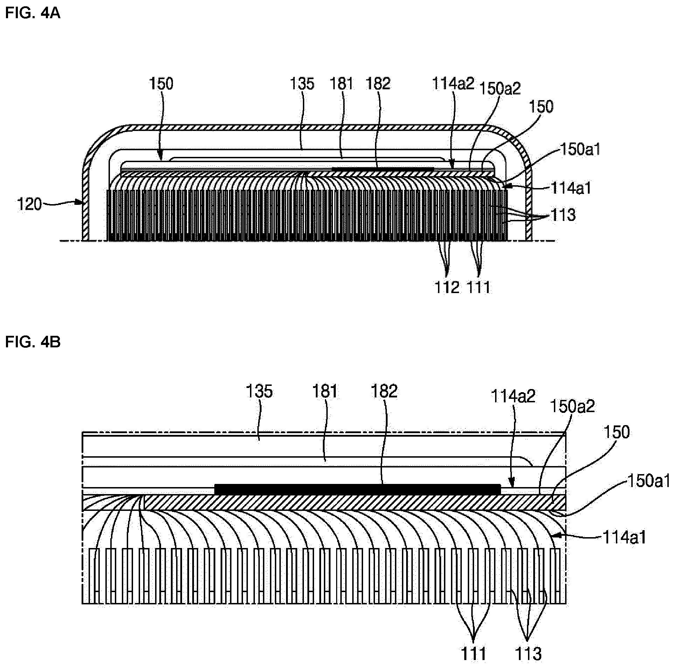

FIG. 3A is a perspective view illustrating the current collector 150 plate in the secondary battery 100 of the present invention, according to an embodiment; FIG. 3B is a perspective view illustrating a welding state between the current collector plate 150 and the electrode assembly 110 (in some examples, a substrate tab); and FIG. 3C is an enlarged perspective view of the welding state. In addition, FIG. 4A is a cross-sectional view illustrating a welding state of the current collector plate 150 and the electrode assembly 110 (in some examples, a substrate tab) in the secondary battery 100 of the present invention, according to an embodiment; and FIG. 4B is an enlarged perspective view thereof.

Here, the present invention will be described with reference to FIGS. 1 and 2A to 2C. In addition, the substrate tabs 114a and 114b on the positive electrode side and the current collector plate 150 on the positive electrode side may be the same as or similar to the substrate tabs 115a and 115b on the negative electrode side and the current collector plate 160 on the negative electrode side, and the following description will be made with respect to the substrate tabs 114a, 114b on the positive electrode side and the current collector plate 150 on the positive electrode side.

As described above, the electrode assembly 110 may include substrate tabs 114a and 114b that protrude outward and are bent, and, in some examples, the substrate tabs 114a and 114b may include or be referred to as a first substrate section 114a and a second substrate section 114b spaced apart from each other in a vertical direction (e.g., the y direction). In some examples, the first and second substrate sections 114a and 114b may include a first substrate region 114a1 and a second substrate region 114a2 that are bent to extend from the first substrate region 114a1, respectively (see FIGS. 4A and 4B). In some examples, the substrate region located on the lower surface of the current collector plate 150 may be defined or be referred to as the first substrate region 114a1, and the substrate region located on the upper surface of the current collector plate 150 may be defined or be referred to as the second substrate region 114a2.

As described above, the bending directions of the first and second substrate sections 114a and 114b (in some examples, the bending direction of the second substrate region 114a2) may be opposite to each other. In some examples, the second substrate region 114a2 of the first substrate section 114a may be bent forward (e.g., the +z direction), and the second substrate region 114a2 of the second substrate section 114b may be bent backward (e.g., the -z direction) (see FIG. 3B).

As described above, the secondary battery 100 may include a current collector plate 150 electrically connecting the electrode assembly 110 and the terminal 130. In some examples, the current collector plate 150 may include a substantially flat first current collecting surface 150a1 and a substantially flat second current collecting surface 150a2 that is an opposite surface of the first current collecting surface 150a1 (see FIGS. 4A and 4B). In some examples, a portion of the first substrate region 114a1 may be in contact with the first current collecting surface 150a1, and the second substrate region 114a2 may be in contact with the second current collecting surface 150a2. In some examples, a welding region 182 may be provided between the second substrate region 114a2 and the second current collecting surface 150a2 of the current collector plate 150. In some examples, the welding region 182 may also be integrally provided with the second substrate region 114a2, the current collector plate 150, and the first substrate region 114a1.

In some examples, the welding region 182 may be provided by a laser beam. In some examples, the welding region 182 may be provided by melting and cooling a partial region of the second substrate region 114a2 and a partial region of the current collector plate 150 or the second current collecting surface 150a2 by the laser beam. In some examples, some regions of the second substrate region 114a2, some regions of the current collector plate 150, and some regions of the first substrate region 114a1 are melted and cooled by the laser beam, thereby providing the welding region 182.

In some examples, the first substrate region 114a1 may be closer to the electrode assembly 110 than the second substrate region 114a2. In other words, the first substrate region 114a1 may be farther from the case 120 (shorter side) than the second substrate region 114a2.

In some examples, the first current collecting surface 150a1 may be closer to the electrode assembly 110 than the second current collecting surface 150a2. In other words, the first current collecting surface 150a1 may be farther from the case 120 (short side) than the second current collecting surface 150a2.

In some examples, the current collector plate 150 may include a substantially flat first current collecting part 151 and a substantially flat second current collecting part 152. In some examples, the current collector plate 150 may further include a current collecting connecting part 153.

In some examples, the current collector plate 150 may further include a current collecting-front end 155, and the current collecting-front end 155 may be welded to a terminal-side current collecting part 154 coupled to the terminal pillar 131. Accordingly, a welding region 181 by a laser beam may be provided to the terminal-side current collecting part 154. In some examples, the current collecting-front end 155 may be electrically/mechanically coupled to the terminal-side current collecting part 154 by a laser beam (see FIGS. 2A, 3A, and 3B).

In some examples, the first current collecting surface 150a1 of the first current collecting part 151 may be seated on the first substrate region 114a1 of the first substrate section 114a, and the second substrate region 114a2 of the first substrate section 114a may be welded to the second current collecting surface 150a2 of the first current collecting part 151.

In some examples, the first current collecting surface 150a1 of the second current collecting part 152 may be seated on the first substrate region 114a1 of the second substrate section 114b, and the second substrate region 114a2 of the second substrate section 114b may be welded to the second current collecting surface 150a2 of the second current collecting part 152.

In some examples, a longitudinal direction of the first current collecting part 151 and a longitudinal direction of the second current collecting part 152 may be offset with respect to each other. In some examples, the first current collecting part 151 and the second current collecting part 152 may be spaced apart from each other by a distance (e.g., a predetermined distance) in the z direction. In some examples, the longitudinal direction of the first current collecting part 151 and the longitudinal direction of the second current collecting part 152 may face the same direction (e.g., the y direction).

In some examples, the current collecting connecting part 153 may connect the first current collecting part 151 and the second current collecting part 152 to each other. In some examples, the width (e.g., a z-direction width) of the current collecting connecting part 153 may be greater than that of the first current collecting part 151 and/or the second current collecting part 152. In some examples, the width of the current collecting connecting part 153 may be similar to or equal to the sum of the widths of the first current collecting part 151 and the width of the second current collecting part 152.

In some examples, the current collecting connecting part 153 may be exposed from the second substrate region 114a2 of the first and second substrate sections 114a and 114b. In other words, the current collecting connecting part 153 may not be covered by the first and second substrate sections 114a and 114b.

In some examples, the first current collecting part 151 of the current collector plate 150 and the second current collecting part 152 of the current collector plate 150 may be closer to the electrode assembly 110 than the current collecting connecting part 153. In other words, the first current collecting part 151 of the current collector plate 150 and the second current collecting part 152 of the current collector plate 150 may be farther from the case 120 (short side) than the current collecting connecting part 153.

In some examples, the current collector plate 150 may further include a first recess 157 and a second recess 158. The first recess 157 is provided on a side of the first current collecting part 151 to allow the first substrate section 114a to pass therethrough, and the second recess 158 is provided on another side of the first current collecting part 151 to allow the second substrate section 114b to pass therethrough.

In some examples, the first recess 157 may be provided between the front end 155 of the first current collecting part 151 and the current collecting connecting part 153, and the second recess 158 may be provided between a distal end 156 of the second current collecting part 152 and the current collecting connecting part 153. Similar to the above, a width of the front end 155 of the first current collecting part 151 and/or a width of the distal end 156 of the second current collecting part may be larger than the widths of the first and second collecting parts 151 and 152, respectively. In some examples, a planar shape of the current collector plate 150 may be a generally meandering shape or a substantially " 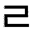 " shape.

As described above, according to embodiments of the present invention, while providing a planar shape of a current collector plate in a " 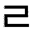 " shape or a meandering shape, and, at the same time, by having a laser welding structure of a substrate tab-current collector plate-substrate tab, damage to a separator can be prevented or substantially prevented, and a widened output margin of a laser beam can be secured. In addition, according to embodiments of the present invention, even when the output of laser beam is increased, damage to a separator can be prevented or substantially prevented, and, thus, a thick current collector plate can be adopted, thereby providing a secondary battery that may provide high-output charge/discharge and/or rapid charge.

As described above, according to embodiments of the present invention, while providing a planar shape of a current collector plate in a " 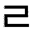 " shape or meandering shape, and, at the same time, by having a laser welding structure of a substrate tab-current collector plate-substrate tab, during a laser welding process, damage to a separator can be prevented or substantially prevented.

In addition, according to embodiments of the present invention, during a laser welding process, damage to a separator can be prevented or substantially prevented, thereby widening an output margin of a laser beam.

In addition, according to embodiments of the present invention, during a laser welding process, a substrate tab is first melted and a current collector plate is then melted, allowing a thicker current collector plate to be used, thereby providing a secondary battery that provides high-output charge/discharge and/or rapid charge.

While some example embodiments for carrying out the secondary battery according to the present invention have been described herein, the present invention is not limited thereto, and it will be understood by a person skilled in the art that various changes in form and details may be made therein without departing from the scope of the present invention as set forth in the following claims.

It is clear for one of ordinary skill in the art that the disclosed embodiments can be combined where possible.

## Claims

1. A secondary battery (100) comprising:
an electrode assembly (110) comprising a substrate tab (114a, 114b) comprising a first substrate region (114a1) and a second substrate region (114a2) bent to extend from the first substrate region (114a1); and
a current collector plate (150) arranged in a region corresponding to the substrate tab (114a, 114b) of the electrode assembly (110) and comprising a first current collecting surface (150a1) and a second current collecting surface (150a2) opposite to the first current collecting surface (150a1),
wherein a portion of the first substrate region (114a1) of the substrate tab (114a, 114b) is in contact with the first current collecting surface (150a1) of the current collector plate (150), the second substrate region (114a2) of the substrate tab (114a, 114b) is in contact with the second current collecting surface (150a2) of the current collector plate (150), and a welding region (181, 182) is located between the second substrate region (114a2) of the substrate tab (114a, 114b) and the second current collecting surface (150a2) of the current collector plate (150), **characterised in that**:
the substrate tab (114a, 114b) comprises a first substrate section (114a) comprising the first and second substrate regions (114a1, 114a2), and a second substrate section (114b) spaced apart from the first substrate section and comprising the first and second substrate regions, the first and second substrate sections (114a, 114b) being bent in opposite directions,
the current collector plate (150) is seated on a first substrate region (114a1) of the first substrate section (114a) and comprises a first current collecting part (151) to which the second substrate region (114a2) of the first substrate section (114a) is welded, and a second current collecting part (152) which is seated on the first substrate region of the second substrate section (114b) and to which the second substrate region of the second substrate section (114b) is welded,
wherein the battery further comprises the following features:
a longitudinal direction of the first current collecting part (151) and a longitudinal direction of the second current collecting part (152) are offset with respect to each other; and/or
the current collector plate (150) further comprises a current collecting connecting part (153) connecting the first current collecting part (151) and the second current collecting part (152), wherein the first current collecting part (151) of the current collector plate (150) and the second current collecting part (152) of the current collector plate (150) are closer to the electrode assembly (110) than the current collecting connecting part (153).

2. The secondary battery (100) of claim 1, wherein the welding region (181, 182) is welded by a laser beam.

3. The secondary battery (100) of claim 1 or 2, wherein the first substrate region (114a1) of the substrate tab (114a, 114b) is closer to the electrode assembly (110) than the second substrate region (114a2) of the substrate tab (114a, 114b).

4. The secondary battery (100) of any one of the preceding claims, wherein the first current collecting surface (150a1) of the current collector plate (150) is closer to the electrode assembly (110) than the second current collecting surface (150a2) of the current collector plate (150).

5. The secondary battery (100) of any one of the preceding claims, wherein the current collector plate (150) has a planar shape including a meandering shape.

6. The secondary battery (100) of any one of the preceding claims, according to the alternative comprising the current collecting connecting part (153), wherein the current collecting connecting part (153) is exposed from the second substrate region (114a2) of the first and second substrate sections (114a, 114b).

7. The secondary battery (100) of any one of the preceding claims, wherein the current collector plate (150) comprises a first recess (157) through which the first substrate section of the substrate tab (114a, 114b) passes through a side of the first current collecting part (151), and a second recess (158) through which the second substrate section of the substrate tab (114a, 114b) passes through a side of the second current collecting part (152).

8. The secondary battery (100) of any one of the preceding claims, further comprising:
a case (120) accommodating the electrode assembly (110);
a first terminal (130) electrically connected to a side of the electrode assembly (110);
a second terminal (140) electrically connected to another side of the electrode assembly (110); and
a cap assembly (170) coupled to an opening of the case (120).

9. The secondary battery (100) of claim 8, wherein the first terminal (130) is electrically connected to first substrate tabs (114a, 115b) and the second terminal (140) is electrically connected to second substrate tabs (115a, 115b).

10. The secondary battery (100) of claim 8 or 9, wherein a first current collector plate (150) is interposed between a side of the electrode assembly (110) and the first terminal (130) and a second current collector plate (160) is interposed between another side of the electrode assembly (110) and the second terminal (140).

## Patentansprüche

1. Sekundärbatterie (100), umfassend:
eine Elektrodenbaugruppe (110), umfassend eine Substratfahne (114a, 114b), die einen ersten Substratbereich (114a1) und einen zweiten Substratbereich (114a2) umfasst, der so gebogen ist, dass er sich von dem ersten Substratbereich (114a1) aus erstreckt; und
eine Stromabnehmerplatte (150), die sich in einem Bereich befindet, der der Substratfahne (114a, 114b) der Elektrodenbaugruppe (110) entspricht und eine erste Stromabnahmefläche (150a1) und eine zweite Stromabnahmefläche (150a2) umfasst, die der ersten Stromabnahmefläche (150a1) gegenüberliegend ist,
wobei ein Abschnitt des ersten Substratbereichs (114a1) der Substratfahne (114a, 114b) in Kontakt mit der ersten Stromabnahmefläche (150a1) der Stromabnehmerplatte (150) steht, der zweite Substratbereich (114a2) der Substratfahne (114a, 114b) in Kontakt mit der zweiten Stromabnahmefläche (150a2) der Stromabnehmerplatte (150) steht und sich ein Schweißbereich (181, 182) zwischen dem zweiten Substratbereich (114a2) der Substratfahne (114a, 114b) und der zweiten Stromabnahmefläche (150a2) der Stromabnehmerplatte (150) befindet, **dadurch gekennzeichnet, dass**:
die Substratfahne (114a, 114b) einen ersten Substratabschnitt (114a), der den ersten und zweiten Substratbereich (114a1, 114a2) umfasst, und einen zweiten Substratabschnitt (114b) umfasst, der von dem ersten Substratabschnitt (114a) beabstandet ist und den ersten und zweiten Substratbereich umfasst, wobei der erste und zweite Substratabschnitt (114a, 114b) in gegenüberliegende Richtungen gebogen sind,
die Stromabnehmerplatte (150) auf einen ersten Substratbereich (114a1) des ersten Substratabschnitts (114a) aufgesetzt ist und einen ersten Stromabnahmeteil (151), an den der zweite Substratbereich (114a2) des ersten Substratabschnitts (114a) geschweißt ist, und einen zweiten Stromabnahmeteil (152) umfasst, der auf den ersten Substratbereich des zweiten Substratabschnitts (114b) aufgesetzt ist und an den der zweite Substratbereich des zweiten Substratabschnitts (114b) geschweißt ist,
wobei die Batterie ferner folgende Merkmale umfasst:
dass eine Längsrichtung des ersten Stromabnahmeteils (151) und eine Längsrichtung des zweiten Stromabnahmeteils (152) in Bezug zueinander versetzt sind; und/oder
dass die Stromabnehmerplatte (150) ferner einen Stromabnehmerverbindungsteil (153) umfasst, der den ersten Stromabnahmeteil (151) und den zweiten Stromabnahmeteil (152) verbindet, wobei sich der erste Stromabnahmeteil (151) der Stromabnehmerplatte (150) und der zweite Stromabnahmeteil (152) der Stromabnehmerplatte (150) näher an der Elektrodenbaugruppe (110) als der Stromabnehmerverbindungsteil (153) befinden.

2. Sekundärbatterie (100) nach Anspruch 1, wobei der Schweißbereich (181, 182) durch einen Laserstrahl verschweißt ist.

3. Sekundärbatterie (100) nach Anspruch 1 oder 2, wobei sich der erste Substratbereich (114a1) der Substratfahne (114a, 114b) näher an der Elektrodenbaugruppe (110) befindet als der zweite Substratbereich (114a2) der Substratfahne (114a, 114b).

4. Sekundärbatterie (100) nach einem der vorhergehenden Ansprüche, wobei sich die erste Stromabnahmefläche (150a1) der Stromabnehmerplatte (150) näher an der Elektrodenbaugruppe (110) befindet als die zweite Stromabnahmefläche (150a2) der Stromabnehmerplatte (150).

5. Sekundärbatterie (100) nach einem der vorhergehenden Ansprüche, wobei die Stromabnehmerplatte (150) eine ebene Gestalt aufweist, die eine mäanderförmige Gestalt umfasst.

6. Sekundärbatterie (100) nach einem der vorhergehenden Ansprüche, gemäß der Alternative, die den Stromabnehmerverbindungsteil (153) umfasst, wobei der Stromabnehmerverbindungsteil (153) von dem zweiten Substratbereich (114a2) des ersten und zweiten Substratabschnitts (114a, 114b) frei liegt.

7. Sekundärbatterie (100) nach einem der vorhergehenden Ansprüche, wobei die Stromabnehmerplatte (150) eine erste Aussparung (157), durch die der erste Substratabschnitt der Substratfahne (114a, 114b) durch eine Seite des ersten Stromabnahmeteils (151) tritt, und eine zweite Aussparung (158) umfasst, durch die der zweite Substratabschnitt der Substratfahne (114a, 114b) durch eine Seite des zweiten Stromabnahmeteils (152) tritt.

8. Sekundärbatterie (100) nach einem der vorhergehenden Ansprüche, ferner umfassend:
ein Gehäuse (120), das die Elektrodenbaugruppe (110) aufnimmt;
einen ersten Anschluss (130), der elektrisch mit einer Seite der Elektrodenbaugruppe (110) verbunden ist;
einen zweiten Anschluss (140), der elektrisch mit der anderen Seite der Elektrodenbaugruppe (110) verbunden ist; und
eine Kappenanordnung (170), die mit einer Öffnung des Gehäuses (120) gekoppelt ist.

9. Sekundärbatterie (100) nach Anspruch 8, wobei der erste Anschluss (130) elektrisch mit ersten Substratfahnen (114a, 115b) verbunden ist und der zweite Anschluss (140) elektrisch mit zweiten Substratfahnen (115a, 115b) verbunden ist.

10. Sekundärbatterie (100) nach Anspruch 8 oder 9, wobei eine erste Stromabnehmerplatte (150) zwischen einer Seite der Elektrodenbaugruppe (110) und dem ersten Anschluss (130) angeordnet ist und eine zweite Stromabnehmerplatte (160) zwischen der anderen Seite der Elektrodenbaugruppe (110) und dem zweiten Anschluss (140) angeordnet ist.

## Revendications

1. Batterie secondaire (100) comportant :
un ensemble électrode (110) comportant une languette de substrat (114a, 114b) comportant une première région de substrat (114a1) et une deuxième région de substrat (114a2) pliée pour s'étendre à partir de la première région de substrat (114a1) ; et
une plaque collectrice de courant (150) agencée dans une région correspondant à la languette de substrat (114a, 114b) de l'ensemble électrode (110) et comportant une première surface de collecte de courant (150a1) et une deuxième surface de collecte de courant (150a2) opposée à la première surface de collecte de courant (150a1),
dans laquelle une partie de la première région de substrat (114a1) de la languette de substrat (114a, 114b) est en contact avec la première surface de collecte de courant (150a1) de la plaque collectrice de courant (150), la deuxième région de substrat (114a2) de la languette de substrat (114a, 114b) est en contact avec la deuxième surface de collecte de courant (150a2) de la plaque collectrice de courant (150), et une région de soudure (181, 182) est située entre la deuxième région de substrat (114a2) de la languette de substrat (114a, 114b) et la deuxième surface de collecte de courant (150a2) de la plaque collectrice de courant (150), **caractérisée en ce que** :
la languette de substrat (114a, 114b) comporte une première section de substrat (114a) comportant les première et deuxième régions de substrat (114a1, 114a2), et une deuxième section de substrat (114b) espacée de la première section de substrat et comportant les première et deuxième régions de substrat, les première et deuxième sections de substrat (114a, 114b) étant pliées dans des directions opposées,
la plaque collectrice de courant (150) repose sur une première région de substrat (114a1) de la première section de substrat (114a) et comporte une première partie de collecte de courant (151) à laquelle est soudée la deuxième région de substrat (114a2) de la première section de substrat (114a), et une deuxième partie de collecte de courant (152) qui repose sur la première région de substrat de la deuxième section de substrat (114b) et à laquelle est soudée la deuxième région de substrat de la deuxième section de substrat (114b),
dans laquelle la batterie comporte en outre les caractéristiques suivantes :
une direction longitudinale de la première partie de collecte de courant (151) et une direction longitudinale de la deuxième partie de collecte de courant (152) sont décalées l'une par rapport à l'autre ; et/ou
la plaque collectrice de courant (150) comporte en outre une partie de connexion de collecte de courant (153) connectant la première partie de collecte de courant (151) et la deuxième partie de collecte de courant (152), dans laquelle la première partie de collecte de courant (151) de la plaque collectrice de courant (150) et la deuxième partie de collecte de courant (152) de la plaque collectrice de courant (150) sont plus proches de l'ensemble électrode (110) que la partie de connexion de collecte de courant (153).

2. Batterie secondaire (100) selon la revendication 1, dans laquelle la région de soudure (181, 182) est soudée par un faisceau laser.

3. Batterie secondaire (100) selon la revendication 1 ou 2, dans laquelle la première région de substrat (114a1) de la languette de substrat (114a, 114b) est plus proche de l'ensemble électrode (110) que la deuxième région de substrat (114a2) de la languette de substrat (114a, 114b).

4. Batterie secondaire (100) selon l'une quelconque des revendications précédentes, dans laquelle la première surface de collecte de courant (150a1) de la plaque collectrice de courant (150) est plus proche de l'ensemble électrode (110) que la deuxième surface de collecte de courant (150a2) de la plaque collectrice de courant (150).

5. Batterie secondaire (100) selon l'une quelconque des revendications précédentes, dans laquelle la plaque collectrice de courant (150) présente une forme plane incluant une forme sinueuse.

6. Batterie secondaire (100) selon l'une quelconque des revendications précédentes, en fonction de l'alternative comportant la partie de connexion de collecte de courant (153), dans laquelle la partie de connexion de collecte de courant (153) est exposée à partir de la deuxième région de substrat (114a2) des première et deuxième sections de substrat (114a, 114b).

7. Batterie secondaire (100) selon l'une quelconque des revendications précédentes, dans laquelle la plaque collectrice de courant (150) comporte un premier évidement (157) à travers lequel la première section de substrat de la languette de substrat (114a, 114b) passe à travers un côté de la première partie de collecte de courant (151), et un deuxième évidement (158) à travers lequel la deuxième section de substrat de la languette de substrat (114a, 114b) passe à travers un côté de la deuxième partie de collecte de courant (152).

8. Batterie secondaire (100) selon l'une quelconque des revendications précédentes, comportant en outre :
un boîtier (120) accueillant l'ensemble électrode (110) ;
une première borne (130) connectée électriquement à un côté de l'ensemble électrode (110) ;
une deuxième borne (140) connectée électriquement à un autre côté de l'ensemble électrode (110) ; et
un ensemble capuchon (170) couplé à une ouverture du boîtier (120).

9. Batterie secondaire (100) selon la revendication 8, dans laquelle la première borne (130) est connectée électriquement aux premières languettes de substrat (114a, 115b) et la deuxième borne (140) est connectée électriquement aux deuxièmes languettes de substrat (115a, 115b).

10. Batterie secondaire (100) selon la revendication 8 ou 9, dans laquelle une première plaque collectrice de courant (150) est interposée entre un côté de l'ensemble électrode (110) et la première borne (130) et une deuxième plaque collectrice de courant (160) est interposée entre un autre côté de l'ensemble électrode (110) et la deuxième borne (140).
